# EUROPÄISCHE PATENTSCHRIFT

(11) **EP 3 433 191 B1**
(45) Veröffentlichungstag und Bekanntmachung des Hinweises auf die Patenterteilung: **25.03.2020**
(21) Anmeldenummer: 17793625.9
(22) Anmeldetag: 26.10.2017
(51) Int. Cl.: B65G 47/86

(54) **TRAGEVORRICHTUNG UND NOCKENSTEUERWELLE FÜR GREIFEINRICHTUNGEN**
CARRYING APPARATUS AND CAM CONTROL SHAFT FOR GRIPPING DEVICES
DISPOSITIF DE SUPPORT ET ARBRE À CAMES POUR DISPOSITIFS DE PRÉHENSION

(30) Priorität: 09.03.2017 DE 102017105015; 09.03.2017 DE 102017105016
(43) Veröffentlichungstag der Anmeldung: 30.01.2019
(73) Patentinhaber: Tyrolon-Schulnig GmbH, 6395 Hochfilzen (AT)
(72) Erfinder: SCHULNIG, Elmar, 6391 Fieberbrunn (AT); SCHULNIG, Ludwig, 6392 St. Jakob in Haus (AT)
(74) Vertreter: Rupprecht, Kay
(86) Internationale Anmeldenummer: PCT/EP2017/077388
(87) Internationale Veröffentlichungsnummer: WO 2018/162096

(56) Entgegenhaltungen:
- EP-A1- 2 159 172
- EP-A2- 0 183 611
- EP-A2- 0 794 413
- CN-A- 102 990 560
- CN-B- 101 885 418
- DE-B- 1 084 640
- US-A- 4 722 432
- US-A- 4 850 823

## Beschreibung

Die vorliegende Erfindung betrifft einen Trägerring und Nockensteuerwelle für Greifeinrichtungen.

Tragevorrichtungen zum Greifen, Halten und/oder Führen von Behältern sind bereits aus dem Stand der Technik bekannt, insbesondere unter dem Namen "Klammerstern". Sie werden vornehmlich bei der fließbandtechnischen Bearbeitung von Behältern bzw. Behältnissen verwendet, die insbesondere zur Befüllung mit Flüssigkeiten oder anderweitigem Schüttgut vorgesehen sind.

Die Tragevorrichtungen werden unter anderem in einem Prozessablauf zum Reinigen, Befüllen und Etikettieren von Behältern verwendet, in denen die Tragevorrichtungen örtlich positioniert und justiert werden müssen, um die Behälter von Förderbändern aufzunehmen und diese zur nächsten Arbeitsstation wie z.B. einer Abfüll-, Reinigungs- oder Etikettieranlage zu transportieren. Hierzu weisen die Tragevorrichtungen Greifeinrichtungen zum Greifen, Halten und/oder Führen von insbesondere flaschenartigen Behältern auf. Eine derartige Greifeinrichtung besitzt wenigstens ein Greifarmpaar aus zwei Greifarmen und kann zwischen einer Greifstellung und einer Öffnungsstellung wechseln. Um einen Behälter zu transportieren, greifen die Greifarme normalerweise unterhalb des Halskragens oder um den Bauch des Behälters. Eine Nockensteuerwelle fungiert hierfür als Öffnungsmittel und beispielsweise eine Spiralfeder oder ein Magnetpaar als Schließmittel der Greifeinrichtung, oder umgekehrt. Dabei wird die Nockensteuerwelle der Greifeinrichtung über ein Betätigungsmittel angesteuert, mit dessen Hilfe die Greifeinrichtung geöffnet und geschlossen werden kann.

Die Greifeinrichtungen werden normalerweise konzentrisch auf einem kreisrunden Trägerring um die Antriebsachse bzw. Antriebswelle der Tragevorrichtung positioniert und befestigt. Dadurch wird sichergestellt, dass nach einer bestimmten Rotationsbewegung des Trägerrings die gleiche oder eine andere Greifvorrichtung wieder an eine selbe oder eine vorbestimmte Position gelangt, an der die Greifeinrichtung einen zu transportierenden Behälter stabil greift oder wieder freigibt. Unter anderem abhängig von der Größe des Trägerrings, insbesondere dessen Radius', kann eine maximale Anzahl von Greifeinrichtungen auf dem Trägerring befestigt werden. Dabei versteht es sich von selbst, dass der Trägerring auch ein- oder mehrstückig als Trägerplatte ausgebildet sein kann. Ebenfalls ist die Anzahl der Greifeinrichtungen auf dem Trägerring sowohl von der Größe der Greifeinrichtungen selbst als auch von der Größe der zu transportierenden Behälter abhängig.

Um die Tragevorrichtungen auf neue Betriebsumstände, wie z.B. neue Anlagen oder Behälter mit einer unterschiedlichen Form und/oder Größe, anzupassen, muss unter anderem die Anzahl oder die Art der Greifeinrichtungen geändert bzw. ausgetauscht werden. Aus dem Stand der Technik ist bekannt, dass die Greifeinrichtungen einen Grundsockel mit drei Vertiefungen aufweisen, in denen zwei Schwenkachsen für beide Greifarme sowie eine drehbar gelagerte Nockensteuerwelle angeordnet sind, wobei der Grundsockel auf einem Trägerring montierbar bzw. montiert ist. Der dadurch erzielbare Vorteil besteht in einer kompakten Greifeinrichtung, die bei einem Austausch der Greifeinrichtung ohne großen Zeitaufwand von dem Trägerring entfernt bzw. auf dem Trägerring positioniert und befestigt werden kann.

Bei den oben genannten Situationen, in denen die Greifarme ausgetauscht werden müssen, werden die Anlagen gestoppt und die entsprechenden Greifarme händisch ausgetauscht. Diese Betriebsunterbrechungen haben eine negative Auswirkung auf die Wirtschaftlichkeit der Anlagen und sollten daher so kurz wie möglich ausfallen.

Auch hat es sich als Nachteil herausgestellt, dass die im Stand der Technik bekannten Greifeinrichtungen schwer zu reinigen sind. Insbesondere bei der Befüllung von Behältern mit Lebensmitteln oder Arzneimitteln ist auf eine sehr hohe Sauberkeit zu achten, die im Stand der Technik nur durch häufige Reinigungsintervalle erreicht werden kann, welche üblicherweise zumindest teilweise manuell durchgeführt werden müssen. CN101885418 beschreibt eine Tragevorrichtung nach dem Oberbegriff des Anspruchs 1.

Es ist daher die Aufgabe der vorliegenden Erfindung, eine Tragevorrichtung und Nockensteuerwelle für Greifeinrichtungen zu konzipieren, die ein schnelles und einfaches Montieren der Greifeinrichtungen ermöglicht sowie Angriffsflächen für Schmutz minimiert.

Diese Aufgabe wird erfindungsgemäß durch eine Tragevorrichtung nach Anspruch 1 gelöst. Danach ist eine Tragevorrichtung zum Aufnehmen, Befestigen und Tragen mindestens einer Greifeinrichtung vorgesehen, welche mindestens ein Greifarmpaar aus einem ersten und einem zweiten Greifarm zum Greifen, Halten und Führen von Behältern aufweist, sowie einen kreisförmigen oder kreissegmentförmigen Trägerring, in dem für jede Greifeinrichtung jeweils in axialer Richtung eine erste Aufnahmeöffnung zum Aufnehmen und Befestigen einer ersten Greifarmschwenkachse des ersten Greifarms, eine zweite Aufnahmeöffnung zum Aufnehmen und Befestigen einer zweiten Greifarmschwenkachse des zweiten Greifarms und eine dritte Aufnahmeöffnung zum rotationsfähigen Aufnehmen einer Nockensteuerwelle zum Öffnen oder Schließen der Greifeinrichtung, und für jede Greifeinrichtung eine vierte Aufnahmeöffnung zum Aufnehmen und Befestigen eines Sicherungsstifts zur rotationsfähigen Sicherung der Nockensteuerwelle vorgesehen ist, wobei sich die vierte Aufnahmeöffnung von der Außenmantelfläche bzw. der Außenkante des Trägerrings in Richtung einwärts zur dritten Aufnahmeöffnung erstreckt und zumindest teilweise in diese hereinragt.

Unter dem Begriff "Behälter" sind im Sinne der vorliegenden Erfindung insbesondere Behälter bzw. Behältnisse zur Aufnahme bzw. zum Transport von Flüssigkeiten oder anderem Schüttgut zu verstehen. Verschiedene Typen von Behältern können sich unter anderem in ihrer Formgebung, ihrem maximalen Füllvolumen und ihrem Werkstoff wie Glas, Kunststoff oder Metall unterscheiden.

Unter dem Begriff "Trägerring" wird im Zusammenhang mit der vorliegenden Erfindung insbesondere, aber nicht ausschließlich eine kreisförmige oder kreissegmentförmige Platte oder ein Ring verstanden, die bzw. der einen Radius aufweist, welcher ein Vielfaches der Platten-bzw. Ringdicke ist. Ein derartiger Trägerring kann beispielsweise aus Metall, Stahl, Aluminium oder einer Legierung bestehen. Auch möglich ist ein Trägerring aus einem Kunststoff.

Unter dem Begriff "Sicherungsstift" wird im Zusammenhang mit der vorliegenden Erfindung insbesondere, aber nicht ausschließlich ein stabförmiges Bauteil, wie beispielsweise eine handelsübliche Schraube, eine Innensechskant-Zylinderschraube, oder eine Madenschraube mit Innensechskantkopf, oder dergleichen verstanden.

Ein Vorteil einer derart ausgestalteten Tragevorrichtung ist, dass kein gesonderter Grundsockel für eine Greifeinrichtung notwendig ist, der die Schwenkachsen und die Steuerwelle aufnimmt, positioniert und befestigt. Auch kann die Nockensteuerwelle durch die vierte Aufnahmeöffnung und den darin befindlichen Sicherungsstift, der diese rotationsfähig sichert, schnell und wartungsarm ausgetauscht werden. Ein weiterer Vorteil besteht darin, dass die Nockensteuerwelle durch den in der vierten Aufnahmeöffnung befindlichen Sicherungsstift ohne eine Beeinträchtigung ihrer Rotation fixiert werden kann.

In einer weiteren Ausführungsform weist die vierte Aufnahmeöffnung ein Innengewinde zur Befestigung eines mit einem Außengewinde versehenen Sicherungsstifts auf. Dadurch ergibt sich der Vorteil, dass der Sicherungsstift mit der vierten Aufnahmeöffnung formschlüssig verbunden wird und auch im Falle von auftretenden Rüttelkräften die gewünschte Position und Funktionalität beibehält.

Erfindungsgemäß verläuft die vierte Aufnahmeöffnung in Form eines Tangentialschnitts durch den Randbereich der dritten Aufnahmeöffnung, so dass ein in die vierte Aufnahmeöffnung eingeführter Sicherungsstift die dritte Aufnahmeöffnung tangential schneidet. Durch eine derart positionierte vierte Aufnahmeöffnung kann eine weiter verbesserte rotationsfähige Sicherung der Nockensteuerwelle erreicht werden, indem die Nockensteuerwelle an geeigneter Stelle eine Tangentialnut aufweist. Mittels der so gestalteten vierten Aufnahmeöffnung ist eine sehr einfache und schnelle Montage bzw. Demontage der Nockensteuerwelle sichergestellt.

Gemäß einer weiteren Ausführungsform erstreckt sich die vierte Aufnahmeöffnung von der Außenmantelfläche des Trägerrings in radialer Richtung einwärts zur dritten Aufnahmeöffnung und ragt radial teilweise in diese hinein. In diesem Fall würde die Nockensteuerwelle an geeigneter Stelle eine wenigstens teilweise ausgebildete Ringnut aufweisen, die eben so lang ist, wie es das Hin- und Herdrehen der Nockensteuerwelle erfordert, wenn ein in die vierte Aufnahmeöffnung eingeführter Sicherungsstift im eingebauten Zustand der Nockensteuerwelle mit seinem Ende in jene Ringnut hineinragt. Auch mittels der so gestalteten vierten Aufnahmeöffnung ist eine sehr einfache und schnelle Montage bzw. Demontage der Nockensteuerwelle sichergestellt, was Wartungsintervalle und die damit verbundenen Stehzeiten der Tragevorrichtung bzw. der gesamten Anlage in großem Maße verringert.

Die der Erfindung zugrundeliegende Aufgabe wird erfindungsgemäß auch durch die Verwendung einer Nockensteuerwelle in einer Tragevorrichtung nach einem der vorangehenden Ausführungsformen gelöst, mit einem stabförmigen oberen Abschnitt, einem zylindrischen Mittelabschnitt, und mit einem als Steuernocke zum Öffnen oder Schließen der Greifeinrichtung ausgebildeten Basisabschnitt, wobei der zylindrische Mittelabschnitt eine Tangentialnut oder eine teilweise ausgebildete Ringnut aufweist.

Durch die erfindungsgemäße Verwendung werden die vorstehend erläuterten Vorteile der Tragevorrichtung ebenfalls erzielt. Zusätzlich hierzu ist die erfindungsgemäße Nockensteuerwelle aufgrund des stabförmigen oberen Abschnitts wesentlich einfacher zu reinigen, wobei dies auch maschinell beispielsweise mittels Spritzdüsen durchgeführt werden kann.

Es hat sich ebenfalls als Vorteil erwiesen, dass der stabförmige obere Abschnitt einen Kopfabschnitt aufweist, dessen Durchmesser geringer als der des stabförmigen oberen Abschnitts ist. Hierdurch wird in der dritten Aufnahmeöffnung zwischen deren Innenrand und dem Kopfabschnitt ein von außen z. B. durch Spritzdüsen besser zugänglicher Raum geschaffen, der leichter sauber zu halten ist, als lediglich ein Spalt zwischen dem Innenrand der dritten Aufnahmeöffnung und dem Außenumfang des Kopfabschnitts.

Eine vorteilhafte Ausführungsform der erfindungsgemäßen Verwendung kann darin bestehen, dass der stabförmige obere Abschnitt und der Mittelabschnitt steckbar miteinander verbindbar sind. Durch diese Ausführungsform wird eine modular aufbaubare Nockensteuerwelle erreicht, in der fehlerhafte Bauteile ausgewechselt werden können, ohne dass die gesamte Nockensteuerwelle entsorgt werden muss. Ebenso kann ein Standard-Mittelabschnitt mit unterschiedlich langen oberen Abschnitten verbunden werden, um somit unterschiedlichen Anforderungen an die Länge der Nockensteuerwelle insgesamt Rechnung tragen zu können, ohne hierfür Sätze von Nockensteuerwellen verschiedener Länge bereithalten zu müssen. Hierdurch werden sowohl Produktionskosten, Lagerkosten, als auch Entsorgungskosten gespart und die Menge an Abfall bei der Produktion wird reduziert.

In einer weiteren vorteilhaften Ausführungsform sind der stabförmige obere Abschnitt, der zylindrische Mittelabschnitt und der Basisabschnitt einstückig ausgebildet. Eine derartige Ausführungsform hat den Vorteil, dass diese mittels aus dem Stand der Technik bekannter Spritzgussverfahren kostengünstig gefertigt werden kann. Darüber hinaus wird durch diese Ausführungsform die Stabilität der Nockensteuerwelle erhöht.

Vorteilhafterweise ist der stabförmige obere Abschnitt im Querschnitt bikonkav ausgebildet und weist einen geringeren Durchmesser auf, als der zylindrische Mittelabschnitt. Ein Vorteil dieser Ausführungsform ist die nochmals erleichterte Reinigungsmöglichkeit. So ist es beispielsweise möglich, dass durch eine in der Nähe des Kopfabschnitts befindliche Reinigungsdüse das Reinigungsmittel direkt über den Kopfabschnitt in Richtung des Basisabschnitts abgegeben wird.

Ebenfalls hat es sich als vorteilhaft erweisen, dass der zylindrische Mittelabschnitt eine Höhe aufweist, welche der axialen Dicke des Trägerrings entspricht. Durch eine derartige Höhe wird eine formabschließende und passgenaue Konstruktion erreicht, wodurch die für die Herstellung der Nockensteuerwelle einzusetzende Materialmenge optimiert und die Reinigung des Lagers der Nockensteuerwelle sowie der Nockensteuerwelle selbst noch weiter erleichtert wird, da Verschmutzungen von einem Eindringen in den Bereich zwischen Nockensteuerwelle und dem Trägerring weitgehend abgehalten werden.

Die eingangs gestellte Aufgabe wird auch durch ein erfindungsgemäßes Verfahren zum Einsetzen einer Nockensteuerwelle nach einem der vorangehenden Ausführungsformen in eine der vorangehenden Tragevorrichtungen gelöst. Hierbei wird die Nockensteuerwelle von unten in die dritte Aufnahmeöffnung eingesetzt, so dass der zylindrische Mittelabschnitt derart in der dritten Aufnahmeöffnung aufgenommen ist, dass die vierte Aufnahmeöffnung mit der Tangentialnut des zylindrischen Mittelabschnitts fluchtet oder auf die teilweise ausgebildete Ringnut weist, woraufhin der Sicherungsstift in die vierte Aufnahmeöffnung und die Tangentialnut bzw. die Ringnut des zylindrischen Mittelabschnitts eingeführt und verschraubt wird.

Durch das erfindungsgemäße Verfahren werden die Vorteile der Nockensteuerwelle und der Tragevorrichtung erzielt. Es hat sich als großer Vorteil erwiesen, dass durch das erfindungsgemäße Verfahren eine schnellere, leichtere und gleichzeitig sichere Montage der Nockensteuerwelle erreicht wird.

Die der Erfindung zugrundeliegende Aufgabe wird auch durch eine Transportvorrichtung mit einer Tragevorrichtung nach einem der vorangehenden Ausführungsformen gelöst, mit mindestens einer Greifeinrichtung zum Greifen, Halten und Führen von Behältern und unter Verwendung einer Nockensteuerwelle nach einem der vorangehenden Ausführungsformen. Durch eine derartige Transportvorrichtung werden die Vorteile der Nockensteuerwelle erzielt. Insbesondere ist die derart ausgebildete Transportvorrichtung leichter zu reinigen, beispielsweise unter Verwendung von Druckdüsen, und der Austausch von Greifeinrichtungen wird erheblich erleichtert.

Weitere Einzelheiten und Vorteile der Erfindung sollen nun anhand einiger in den Zeichnungen dargestellter und bevorzugter Ausführungsbeispiele näher erläutert werden. Es zeigen:
- Figur 1: ein Segment eines Trägerrings mit einer vierten Aufnahmeöffnung;
- Figur 2: das Segment des Trägerrings der Figur 1 mit einer eingesteckten Nockensteuerwelle;
- Figur 3: das Segment des Trägerrings der Figur 2 mit einer fixierten Nockensteuerwelle;
- Figur 4a: die Nockensteuerwelle in Detailansicht gemäß einer Ausführungsform;
- Figur 4b: die Nockensteuerwelle der Figur 4a in einer anderen Perspektive;
- Figur 5: ein Segment der Transportvorrichtung mit einer montierten Greifeinrichtung und einer Nockensteuerwelle;
- Figur 6: eine teilweise Explosionszeichnung des Segments der Transportvorrichtung der Figur 5.

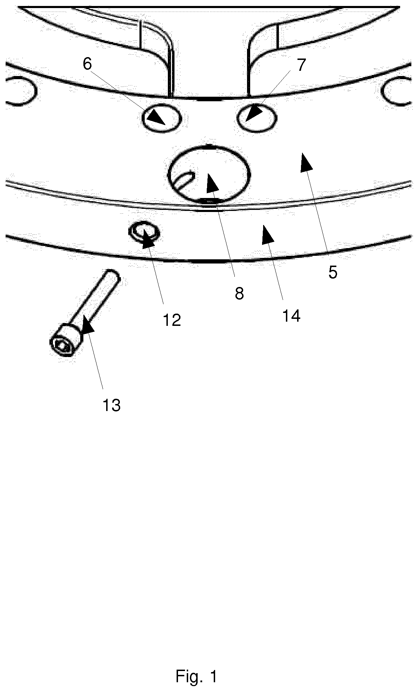

Figur 1 zeigt ein Segment eines Trägerrings mit einer vierten Aufnahmeöffnung gemäß der vorliegenden Erfindung. Der Trägerring 5 weist eine erste Aufnahmeöffnung 6, eine zweite Aufnahmeöffnung 7 und eine dritte Aufnahmeöffnung 8 auf. Die Seitenfläche, an der sich die vierte Aufnahmeöffnung 12 befindet, wird als Außenmantelfläche 14 oder Außenkante des Trägerrings 5 bezeichnet. Schematisch ist in der Figur 1 zu erkennen, dass die vierte Aufnahmeöffnung 12 ein Innengewinde aufweist. Die vierte Aufnahmeöffnung 12 erstreckt sich von der Außenmantelfläche 14 des Trägerrings 5 in Richtung einwärts zur dritten Aufnahmeöffnung 8 und ragt zumindest teilweise in diese hinein. "Zumindest teilweise" bedeutet hierbei, dass die sich von der Außenmantelfläche 14 des Trägerrings 5 einwärts erstreckende vierte Aufnahmeöffnung 12 die dritte Aufnahmeöffnung 8 entweder tangential schneiden oder aber radial in die dritte Aufnahmeöffnung 8 hineinragen kann.

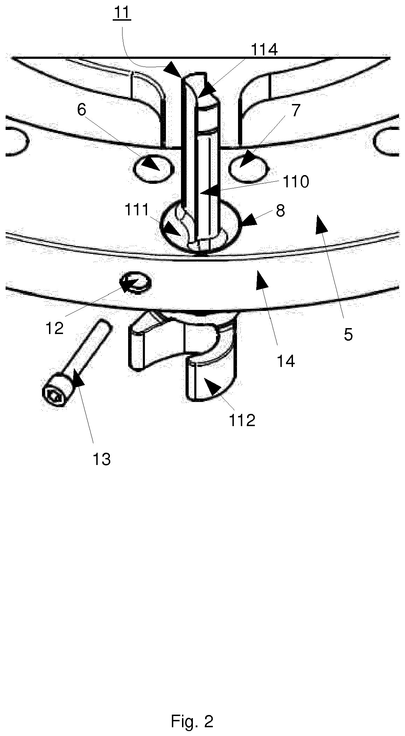

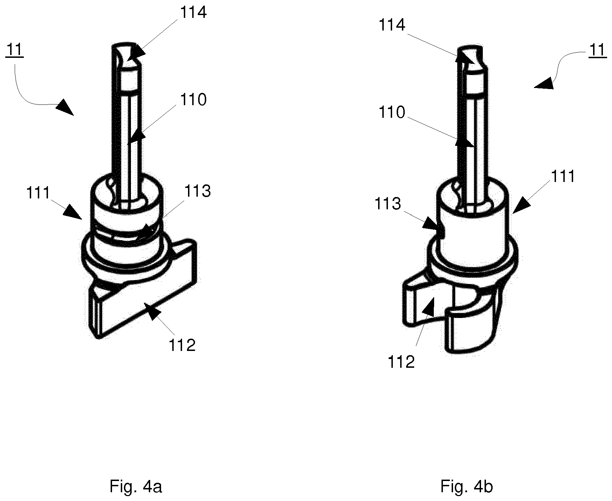

Die Figur 2 zeigt das Segment des Trägerrings der Figur 1 mit einer eingesteckten Nockensteuerwelle 11 gemäß der vorliegenden Erfindung. Die Nockensteuerwelle 11 wurde in den Trägerring 5 derart eingesteckt, dass der zylindrische Mittelabschnitt 111, der eine Höhe aufweist, welche der axialen Dicke des Trägerrings 5 entspricht, mit dieser ein abgeschlossene bzw. zumindest teilweise abgeschlossene Fläche bildet. An den zylindrischen Mittelabschnitt 111 der Nockensteuerwelle schließt sich ein oberer Abschnitt 110 sowie ein Basisabschnitt 112 an, wobei letzterer in an sich bekannter Weise beispielsweise eine zangenähnliche Form aufweist. Im Bereich des zylindrischen Mittelabschnitts 111 weist die Nockensteuerwelle 11 eine Tangentialnut 113 auf, welche in der Figur 2 nicht abgebildet ist (vergleiche aber die Fig. 4a und 4b). In diese Tangentialnut 113 wird durch die vierte Aufnahmeöffnung 12 ein Sicherungsstift 13 geschoben, welcher zumindest teilweise ein Außengewinde 15 aufweist, welches mit dem Innengewinde der vierten Aufnahmeöffnung 12 formschlüssig ist. Bei dem Sicherungsstift 13 kann es sich beispielsweise um eine handelsübliche Schraube, eine Innensechskant-Zylinderschraube, oder eine Madenschraube mit Innensechskantkopf handeln. Es ist selbstverständlich, dass für den Sicherungsstift 13 auch andere Bauteile, welche diese Funktion erfüllen können, in Betracht kommen. Darüber hinaus kann, nicht dargestellt, der Mittelabschnitt 111 der Nockensteuerwelle 11 alternativ zur Tangentialnut 113 auch eine teilweise ausgebildete Ringnut aufweisen, in welcher dann der Sicherungsstift radial hineinragt. Dabei ist dann die Länge der Ringnut so zu bemessen, dass sie mit dem in sie hineinragenden Sicherungsstift das zum Öffnen und Schließen einer Greifvorrichtung erforderliche Hin- und Herdrehen der Nockensteuerwelle 11 ermöglicht, aber ein Herausfallen der Nockensteuerwelle 11 aus der dritten Aufnahmeöffnung 8 verhindert wird. Allerdings ist die Alternative mit der Tangentialnut 113 wegen der gegenüber einem in radialer Richtung in eine teilweise Ringnut eingreifenden Sicherungsstift größeren Führungsfläche zwischen Sicherungsstift und Nut zu bevorzugen.

Der obere Abschnitt 110 der Nockensteuerwelle ist in der abgebildeten Figur stabförmig und im Querschnitt bikonkav ausgebildet und weist einen geringeren Durchmesser als der zylindrische Mittelabschnitt 110 auf. Auch weist dieser einen Kopfabschnitt 114 auf, dessen Durchmesser geringer ist, als der des stabförmigen oberen Abschnitts 110.

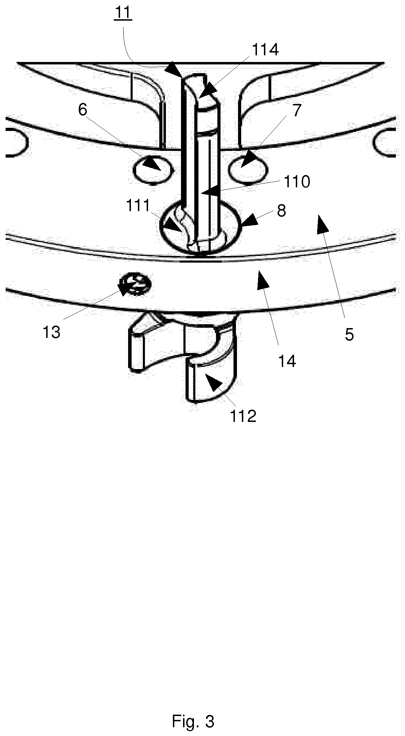

Die Figur 3 zeigt das Segment des Trägerrings der Figur 2, wobei die Nockensteuerwelle rotationsfähig mittels des Sicherungsstifts 13 fixiert ist. Die Nockensteuerwelle 11 ist mittels des Sicherungsstifts 13 rotationsfähig fixiert, wobei der montierte Sicherungsstift 13, der in die vierte Aufnahmeöffnung 12 aufgenommen wurde, nicht erkennbar ist. Für die Montage wurde die Nockensteuerwelle 11 von unten in die dritte Aufnahmeöffnung 8 eingesetzt, so dass der zylindrische Mittelabschnitt 111 derart in der dritten Aufnahmeöffnung 8 aufgenommen ist, dass die vierte Aufnahmeöffnung 12 mit der Tangentialnut 113 des zylindrischen Mittelabschnitts 111 fluchtet, woraufhin der Sicherungsstift 13 in die vierte Aufnahmeöffnung 12 und die Tangentialnut 113 des zylindrischen Mittelabschnitts 111 eingeführt und verschraubt wird.

Die Figur 4a zeigt die Nockensteuerwelle in Detailansicht gemäß einer erfindungsgemäßen Ausführungsform. Diese Nockensteuerwelle 11 weist einen stabförmigen oberen Abschnitt 110, einen zylindrischen Mittelabschnitt 111, und mit einem als Steuernocke zum Öffnen oder Schließen der Greifeinrichtung 2 ausgebildeten Basisabschnitt 112 auf. Auch weist der zylindrische Mittelabschnitt 111 der Steuernocke 11 eine Tangentialnut 113 auf. Der stabförmige obere Abschnitt 110 weist einen Kopfabschnitt 114 auf, dessen Durchmesser geringer als der des stabförmigen oberen Abschnitts 110 ist.

Die Figur 4b zeigt die Nockensteuerwelle 11 der Figur 4a in einer anderen Perspektive, wobei insbesondere die zangenartige Form des Basisabschnitts 112 erkennbar ist. Auch ist erkennbar, dass sich die Tangentialnut 113 nicht komplett um den Umfang des zylindrischen Mittelabschnitts 111 der Nockensteuerwelle herum erstreckt, sondern nur in einem radialen Teilbereich.

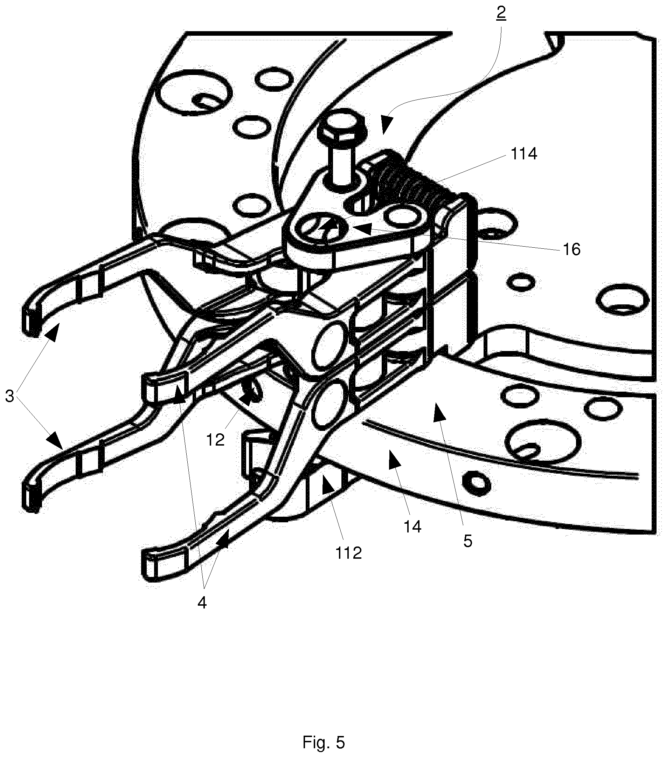

Die Figur 5 zeigt ein Segment der Transportvorrichtung mit einer montierten Greifeinrichtung und einer Nockensteuerwelle. Die Greifeinrichtung 2 befindet sich in einem halbgeöffneten Zustand, wie anhand der Stellung des ersten und zweiten Greifarms 3, 4 erkennbar ist. Die Nockensteuerwelle 11 ist größtenteils durch die Greifeinrichtung 2 verdeckt. Erkennbar ist jedoch, dass der Kopfabschnitt 114 der Nockensteuerwelle 11 mit dem oberen Teil des Gegenlagers 16 planschlüssig abschließt. Dies ist durch eine passende Höhe des Kopfabschnitts 114 möglich. Auch gut ersichtlich ist der Vorteil, dass durch die Form des Kopfabschnitts 114 der Nockensteuerwelle 11 mindestens zwei Zwischenräume zwischen dem oberen Teil des Gegenlagers 16 und dem Kopfabschnitt 114 frei bleiben, durch welche beispielsweise mittels Düsen (nicht abgebildet) eine Reinigung der Greifvorrichtung 2 bzw. der Nockensteuerwelle 11 erfolgen kann.

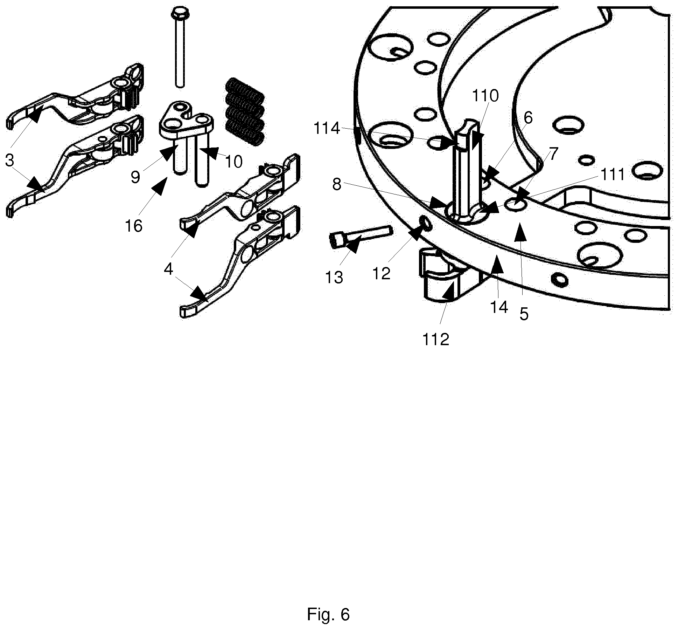

Die Figur 6 zeigt das Segment der erfindungsgemäßen Transportvorrichtung der Figur 5 in teilweiser Explosionszeichnung. Die Greifeinrichtung 2 ist als Explosionszeichnung dargestellt und weist ein Greifarmpaar auf, mit einem ersten und einem zweiten Greifarm 3, 4 zum Greifen, Halten und Führen von Behältern. Auch zeigt das abgebildete Segment der Transportvorrichtung einen kreissegmentförmigen Trägerring 5, in den für jede Greifeinrichtung 2 jeweils in axialer Richtung eine erste Aufnahmeöffnung 6 zum Aufnehmen und Befestigen einer ersten Greifarmschwenkachse 9 des ersten Greifarms 3, eine zweite Aufnahmeöffnung 7 zum Aufnehmen und Befestigen einer zweiten Greifarmschwenkachse 10 des zweiten Greifarms und eine dritte Aufnahmeöffnung 8 zum rotationsfähigen Aufnehmen einer Nockensteuerwelle 11 zum Öffnen oder Schließen der Greifeinrichtung 2 ausgebildet sind. Auch weist der Trägerring 5 für jede Greifeinrichtung 2 eine vierte Aufnahmeeinrichtung 12 zum Aufnehmen und Befestigen eines Sicherungsstifts 13 zur rotationsfähigen Sicherung der Nockensteuerwelle 11 auf, wobei sich die vierte Aufnahmeöffnung 12 von der Außenmantelfläche bzw. der Außenkante 14 des Trägerrings 5 in Richtung einwärts zur dritten Aufnahmeöffnung 8 erstreckt und zumindest teilweise in diese hineinragt. In der Figur 5 ist der genaue Verlauf der vierten Aufnahmeöffnung 12 nicht abgebildet. Erfindungsgemäß verläuft die vierte Aufnahmeöffnung 12 in Form eines Tangentialschnitts durch den Randbereich der dritten Aufnahmeöffnung 8, so dass ein in die vierte Aufnahmeöffnung 12 eingeführter Sicherungsstift 13 die dritte Aufnahmeöffnung 8 tangential schneidet. Auch ist es möglich, dass sich die vierte Aufnahmeöffnung 12 von der Außenmantelfläche bzw. der Außenkante 14 des Trägerrings 5 in radialer Richtung einwärts zur dritten Aufnahmeöffnung 8 erstreckt und radial teilweise in diese hineinragt. Der abgebildete Sicherungsstift 13 ist in der vorliegenden Figur eine Madenschraube mit Innensechskantkopf mit einem Außengewinde, welches sich zumindest auf dem Innensechskantkopf befindet. Das abgebildete Gegenlager 16 der Greifeinrichtung 2 ist derart ausgebildet, dass die jeweiligen Greifarmschwenkachsen 9, 10 in die erste bzw. zweite Aufnahmeöffnung 6, 7 montiert werden können. Der Kopfabschnitt 14 der Nockensteuerwelle 11 ist im Querschnitt bikonkav ausgebildet, ebenso wie der stabförmige obere Abschnitt 110, und weist einen geringeren Durchmesser als dieser auf.

### Bezugszeichenliste

- 2: Greifeinrichtung
- 3: erster Greifarm
- 4: zweiter Greifarm
- 5: Trägerring
- 6: erste Aufnahmeöffnung
- 7: zweite Aufnahmeöffnung
- 8: dritte Aufnahmeöffnung
- 9: erste Greifarmschwenkachse
- 10: zweite Greifarmschwenkachse
- 11: Nockensteuerwelle
- 12: vierte Aufnahmeöffnung
- 13: Sicherungsstift
- 14: Außenmantelfläche
- 15: Außengewinde
- 16: Gegenlager
- 110: oberer Abschnitt
- 111: zylindrischer Mittelabschnitt
- 112: Basisabschnitt
- 113: Tangentialnut
- 114: Kopfabschnitt

## Patentansprüche

1. Tragevorrichtung zum Aufnehmen, Befestigen und Tragen mindestens einer Greifeinrichtung (2), welche mindestens ein Greifarmpaar aus einem ersten und einem zweiten Greifarm (3, 4) zum Greifen, Halten und Führen von Behältern aufweist, mit einer kreisförmigen oder kreissegmentförmigen Trägerplatte (5), in der für jede Greifeinrichtung (2) jeweils in axialer Richtung eine erste Aufnahmeöffnung (6) zum Aufnehmen und Befestigen einer ersten Greifarmschwenkachse (9) des ersten Greifarms (3), eine zweite Aufnahmeöffnung (7) zum Aufnehmen und Befestigen einer zweiten Greifarmschwenkachse (10) des zweiten Greifarms (4) und eine dritte Aufnahmeöffnung (8) zum rotationsfähigen Aufnehmen einer Nockensteuerwelle (11) zum Öffnen oder Schließen der Greifeinrichtung (2) ausgebildet sind, wobei
in der Trägerplatte (5) für jede Greifeinrichtung (2) eine vierte Aufnahmeöffnung (12) zum Aufnehmen und Befestigen eines Sicherungsstifts (13) zur rotationsfähigen Sicherung der Nockensteuerwelle (11) vorgesehen ist, wobei sich die vierte Aufnahmeöffnung (12) von der Außenmantelfläche (14) der Trägerplatte (5) in Richtung einwärts zur dritten Aufnahmeöffnung (8) erstreckt und zumindest teilweise in diese hereinragt,
**dadurch gekennzeichnet, dass**
die vierte Aufnahmeöffnung (12) in Form eines Tangentialschnitts durch den Randbereich der dritten Aufnahmeöffnung (8) verläuft, so dass ein in die vierte Aufnahmeöffnung (12) eingeführter Sicherungsstift (13) die dritte Aufnahmeöffnung (8) tangential schneidet.

2. Tragevorrichtung nach Anspruch 1,
**dadurch gekennzeichnet, dass**
die vierte Aufnahmeöffnung (12) ein Innengewinde zur Befestigung eines mit einem Außengewinde (15) versehenen des Sicherungsstifts (13) aufweist.

3. Tragevorrichtung nach Anspruch 1 oder 2,
**dadurch gekennzeichnet, dass**
sich die vierte Aufnahmeöffnung (12) von der Außenmantelfläche (14) der Trägerplatte (5) in radialer Richtung einwärts zur dritten Aufnahmeöffnung (8) erstreckt und radial teilweise in diese hineinragt.

4. Verwendung einer Nockensteuerwelle (11) in einer Tragevorrichtung nach einem der Ansprüche 1 bis 3, mit einem stabförmigen oberen Abschnitt (110), einem zylindrischen Mittelabschnitt (111), und mit einem als Steuernocke zum Öffnen oder Schließen der Greifeinrichtung (2) ausgebildeten Basisabschnitt (112),
**dadurch gekennzeichnet, dass**
der zylindrische Mittelabschnitt (111) eine Tangentialnut (113) oder eine teilweise ausgebildete Ringnut aufweist.

5. Verwendung nach Anspruch 4,
**dadurch gekennzeichnet, dass**
der stabförmige obere Abschnitt (110) einen Kopfabschnitt (114) aufweist, dessen Durchmesser geringer als der des stabförmigen oberen Abschnitts (110) ist.

6. Verwendung nach Anspruch 4 oder 5,
**dadurch gekennzeichnet, dass**
der stabförmige obere Abschnitt (110) und der Mittelabschnitt (111) steckbar miteinander verbindbar sind.

7. Verwendung nach einem der Ansprüche 4 bis 6,
**dadurch gekennzeichnet, dass**
der stabförmige obere Abschnitt (110), der zylindrische Mittelabschnitt (111) und der Basisabschnitt (112) einstückig ausgebildet sind.

8. Verwendung nach einem der Ansprüche 4 bis 7,
**dadurch gekennzeichnet, dass**
der stabförmige obere Abschnitt (110) im Querschnitt bikonkav ausgebildet ist und einen geringeren Durchmesser als der zylindrische Mittelabschnitt (111) aufweist.

9. Verwendung nach einem der Ansprüche 4 bis 8,
**dadurch gekennzeichnet, dass**
der zylindrische Mittelabschnitt (111) eine Höhe aufweist, welche der axialen Dicke der Trägerplatte (12) entspricht.

10. Verfahren zum Einsetzen der in einem der Ansprüche 4 bis 9 verwendeten Nockensteuerwelle (11) in eine Tragevorrichtung nach einem der Ansprüche 1 bis 3,
**dadurch gekennzeichnet, dass**
die Nockensteuerwelle (11) von unten in die dritte Aufnahmeöffnung (8) eingesetzt wird, so dass der zylindrische Mittelabschnitt (111) derart in der dritten Aufnahmeöffnung (8) aufgenommen ist, dass die vierte Aufnahmeöffnung (12) mit der Tangentialnut (113) des zylindrischen Mittelabschnitts (111) fluchtet oder auf die teilweise ausgebildete Ringnut weist, woraufhin der Sicherungsstift (13) in die vierte Aufnahmeöffnung (12) und die Tangentialnut (113) bzw. die Ringnut des zylindrischen Mittelabschnitts (111) eingeführt und verschraubt wird.

11. Transportvorrichtung mit einer Tragevorrichtung nach einem der Ansprüche 1 bis 3, mit mindestens einer Greifeinrichtung (2) zum Greifen, Halten und Führen von Behältern und mit einer nach einem der Ansprüche 4 bis 9 verwendeten Nockensteuerwelle (11).

## Claims

1. A supporting device for receiving, securing and supporting at least one gripping mechanism (2) comprising at least one gripper arm pair of a first and a second gripper arm (3, 4) for gripping, holding and guiding containers which has a circular or circular-segmented support plate (5) in which a first receiving opening (6) for accommodating and fixing a first gripper arm pivot axis (9) of the first gripper arm (3), a second receiving opening (7) for accommodating and fixing a second gripper arm pivot axis (10) of the second gripper arm (4) and a third receiving opening (8) for the rotatable receiving of a cam control shaft (11) for opening or closing the gripping mechanism (2) is respectively formed in the axial direction for each gripping mechanism (2), wherein
a fourth receiving opening (12) for accommodating and fixing a locking pin (13) for the rotatable securing of the cam control shaft (11) is provided in the support plate (5) for each gripping mechanism (2), wherein the fourth receiving opening (12) extends inwardly from the outer lateral surface (14) of the support plate (5) to the third receiving opening (8) and at least partly projects into same,
**characterized in that**
the fourth receiving opening (12) runs as a tangential cut through the edge region of the third receiving opening (8) so that a locking pin (13) introduced into the fourth receiving opening (12) tangentially intersects the third receiving opening (8).

2. The supporting device according to claim 1,
**characterized in that**
the fourth receiving opening (12) exhibits an internal thread for the securing of a locking pin (13) provided with an external thread (15).

3. The supporting device according to claim 1 or 2,
**characterized in that**
the fourth receiving opening (12) radially extends inwardly from the outer lateral surface (14) of the support plate (5) to the third receiving opening (8) and partly projects into same radially.

4. Use of a cam control shaft (11) in a supporting device according to one of claims 1 to 3, comprising a rod-shaped upper section (110), a cylindrical center section (111), and a base section (112) configured as a control cam for opening or closing the gripping mechanism (2),
**characterized in that**
the cylindrical center section (111) exhibits a tangential groove (113) or a partially formed annular groove.

5. The use according to claim 4,
**characterized in that**
the rod-shaped upper section (110) comprises a head section (114), the diameter of which is less than that of the rod-shaped upper section (110).

6. The use according to claim 4 or 5,
**characterized in that**
the rod-shaped upper section (110) and the center section (111) are connectable by plugging into each other.

7. The use according to one of claims 4 to 6,
**characterized in that**
the rod-shaped upper section (110), the cylindrical center section (111) and the base section (112) are integrally formed.

8. The use according to one of claims 4 to 7,
**characterized in that**
the rod-shaped upper section (110) is of biconcave configuration in cross section and has a smaller diameter than the cylindrical center section (111).

9. The use according to one of claims 4 to 8,
**characterized in that**
the cylindrical center section (111) has a height which corresponds to the axial thickness of the support plate (12).

10. A method for inserting the cam control shaft (11) as used in one of claims 4 to 9 into a supporting device according to one of claims 1 to 3,
**characterized in that**
the cam control shaft (11) is inserted into the third receiving opening (8) from below so that the cylindrical center section (111) is accommodated in the third receiving opening (8) such that the fourth receiving opening (12) aligns with the tangential groove (113) of the cylindrical center section (111) or points toward the partially formed annular groove, whereupon the locking pin (13) is introduced and screwed into the fourth receiving opening (12) and the tangential groove (113) or annular groove of the cylindrical center section (111) respectively.

11. A transporting device having a supporting device according to one of claims 1 to 3, which comprises at least one gripping mechanism (2) for the gripping, holding and guiding of containers and a cam control shaft (11) as used in accordance with one of claims 4 to 9.

## Revendications

1. Dispositif de support pour recevoir, fixer et porter au moins un moyen de préhension (2), qui présente au moins une paire de bras de préhension constituée d'un premier et d'un deuxième bras de préhension (3, 4) pour prendre, tenir et guider des récipients, avec une plaque de support (5) en forme de cercle ou en forme de segment de cercle, dans laquelle, pour chaque moyen de préhension (2) dans une direction axiale respective, sont réalisées une première ouverture de réception (6) pour recevoir et fixer un premier axe de pivotement de bras de préhension (9) du premier bras de préhension (3), une deuxième ouverture de réception (7) pour recevoir et fixer un deuxième axe de pivotement de bras de préhension (10) du deuxième bras de préhension (4), et une troisième ouverture de réception (8) pour recevoir, avec faculté de rotation, un arbre de commande à cames (11) pour ouvrir ou fermer le moyen de préhension (2), dans lequel
dans la plaque de support (5), il est prévu, pour chaque moyen de préhension (2), une quatrième ouverture de réception (12) pour recevoir et fixer une goupille de sécurité (13) pour sécuriser, avec faculté de rotation, l'arbre de commande à cames (11), dans lequel la quatrième ouverture de réception (12) s'étend depuis la surface enveloppe extérieure (14) de la plaque de support (5) dans une direction allant vers l'intérieur de la troisième ouverture de réception (8) et pénétrant au moins en partie dans celle-ci,
**caractérisé en ce que**
la quatrième ouverture de réception (12) s'étend dans une forme d'une section tangentielle à travers la zone de bordure de la troisième ouverture de réception (8) de sorte qu'une goupille de sécurité (13) introduite dans la quatrième ouverture de réception (12) coupe la troisième ouverture de réception (8) de manière tangentielle.

2. Dispositif de support selon la revendication 1,
**caractérisé en ce que**
la quatrième ouverture de réception (12) présente un taraudage pour fixer une goupille de sécurité (13) munie d'un filetage (15).

3. Dispositif de support selon la revendication 1 ou 2,
**caractérisé en ce que**
la quatrième ouverture de réception (12) s'étend depuis la surface enveloppe extérieure (14) de la plaque de support (5) dans une direction radiale allant vers l'intérieur de la troisième ouverture de réception (8) et pénètre radialement en partie dans celle-ci.

4. Utilisation d'un arbre de commande à cames (11) dans un dispositif de support selon l'une des revendications 1 à 3, avec une section supérieure en forme de tige (110), une section médiane cylindrique (111) et une section de base (112) réalisée sous forme de came de commande pour ouvrir ou fermer le moyen de préhension (12),
**caractérisée en ce que**
la section médiane cylindrique (111) présente une rainure tangentielle (113) ou une rainure circulaire réalisée en partie.

5. Utilisation selon la revendication 4,
**caractérisée en ce que**
la section supérieure en forme de tige (110) présente une section de tête (114) dont le diamètre est inférieur à celui de la section supérieure en forme de tige (110).

6. Utilisation selon la revendication 4 ou 5,
**caractérisée en ce que**
la section supérieure en forme de tige (110) et la section médiane (111) peuvent être connectées mutuellement de manière enfichable.

7. Utilisation selon l'une des revendications 4 à 6,
**caractérisée en ce que**
la section supérieure en forme de tige (110), la section médiane cylindrique (111) et la section de base (112) sont réalisées d'un seul tenant.

8. Utilisation selon l'une des revendications 4 à 7,
**caractérisée en ce que**
la section supérieure en forme de tige (110) est réalisée de manière biconcave dans la section transversale et présente un diamètre inférieur à celui de la section médiane cylindrique (111).

9. Utilisation selon l'une des revendications 4 à 8,
**caractérisée en ce que**
la section médiane cylindrique (111) présente une hauteur qui correspond à l'épaisseur axiale de la plaque de support (5).

10. Procédé de mise en place de l'arbre de commande à cames (11) utilisé selon l'une des revendications 4 à 9 dans un dispositif de support selon l'une des revendications 1 à 3,
**caractérisé en ce que**
l'arbre de commande à cames (11) est mis en place par le bas dans la troisième ouverture de réception (8) de sorte que la section médiane cylindrique (111) est reçue dans la troisième ouverture de réception (8) de telle sorte que la quatrième ouverture de réception (12) est alignée avec la rainure tangentielle (113) de la section médiane cylindrique (111) ou pointe sur la rainure circulaire réalisée en partie, à la suite de quoi la goupille de sécurité (13) est introduite et vissée dans la quatrième ouverture de réception (12) et dans la rainure tangentielle (113) ou la rainure circulaire de la section médiane cylindrique (111).

11. Dispositif de transport avec un dispositif de support selon l'une des revendications 1 à 3, avec au moins un moyen de préhension (2) pour prendre, tenir et guider des récipients, et avec un arbre de commande à cames (11) utilisé selon l'une des revendications 4 à 9.
